Europäisches Patentamt

**European Patent Office**

Office européen des brevets

(19)

(11) Veröffentlichungsnummer: **0 079 428**
**B1**

(12) **EUROPÄISCHE PATENTSCHRIFT**

(45) Veröffentlichungstag der Patentschrift:
**03.06.87**

(51) Int. Cl.⁴: **H 04 N 5/225**

(21) Anmeldenummer: **82107176.8**

(22) Anmeldetag: **09.08.82**

(54) **Kompakt-Fernsehkamera für Innenraum- oder Aussenverwendung.**

(30) Priorität: **07.11.81 DE 3144275**

(43) Veröffentlichungstag der Anmeldung:
**25.05.83 Patentblatt 83/21**

(45) Bekanntmachung des Hinweises auf die Patenterteilung:
**03.06.87 Patentblatt 87/23**

(84) Benannte Vertragsstaaten:
**AT BE CH DE FR GB IT LI**

(56) Entgegenhaltungen:
**DE - B - 2 921 927**

(73) Patentinhaber: **GRUNDIG E.M.V. Elektro-Mechanische Versuchsanstalt Max Grundig holländ. Stiftung & Co. KG., Kurgartenstrasse 37, D-8510 Fürth (DE)**

(72) Erfinder: **Böhm, Friedrich, Kilianstrasse 39, D-8500 Nürnberg (DE)**
Erfinder: **Sebald, Richard, Rotdornweg 16, D-8551 Wiesenttal (DE)**

ACTORUM AG

**Beschreibung**

Die Erfindung bezieht sich auf eine Kompakt-Fernsehkamera für Innenraum- oder Aussenverwendung mittels einfacher Umrüstung gemäss dem Oberbegriff des Anspruchs 1.

Kompakt-Fernsehkameras werden grösstenteils für Überwachungszwecke eingesetzt und sind demzufolge in Innenräumen oder im Freien installiert, wobei es für letzteren Aufstellungsort einer wetterfesten Ausführung der Kamera bedarf.

Es sind bereits Kompektkameras (z.B. die Fernsehkamera vom Typ FA 70 H der Anmelderin) für nahezu alle Anwendungsprobleme bekannt, mit denen ein Innenraumbetrieb und nach entsprechender Umrüstung (Stromversorgung, Objektivtubus, Steckergehäuse) ein wetterfester Einsatz im Freien möglich ist. Auch ist für eine wetterfeste Ausführung einer Fernsehkamera bereits eine direkte Frontscheibenbeheizung bekannt (DE-C-2 921 927), bei der an der Innenseite der Frontscheibe zwei Heizbeläge aufgedampft sind und die einen aufwendigen Objektivtubus aufweist.

Die meisten bekannten Kompakt-Fernsehkameras besitzen ein Leichtmetall-Druckgussgehäuse, gebildet aus Boden, Stirn- und Rückwand sowie eine Abdeckhaube, z.B. die Kamera FA 70 H der Anmelderin. Eine bekannte Kamera der Firma Bosch besitzt ausschwenkbare Leiterplatten, die nach Abnahme des Gehäuses zugänglich sind. Der Gehäuseaufbau erweist sich jedoch als ungünstig, da beispielsweise im Service-Fall das Gehäuse abgenommen oder gar die gesamte Kamera demontiert werden muss.

Bekannte Kompakt-Fernsehkameras, die im übrigen für ihren jeweiligen Verwendungsort und Verwendungszweck bestimmten Schutzarten entsprechen, werden stehend oder hängend montiert (Sockel an der Kameraunterseite), wobei insbesondere eine hängende Montage Probleme aufwerfen kann (Änderung der Ablenkung, Wärmeprobleme, etc.).

Der Erfindung liegt die Aufgabe zugrunde, eine montage- und servicefreundliche Kompakt-Fernsehkamera einfachen Aufbaus zu schaffen, die durch eine einfache Umrüstung als wetterfeste Fernsehkamera einsetzbar ist.

Diese Aufgabe wird erfindungsgemäss durch die im kennzeichnenden Teil des Anspruchs 1 angegebene Kombination von Merkmalen gelöst.

Vorteilhafte Weiterbildungen der erfindungsgemässen Kompakt-Fernsehkamera ergeben sich aus den Unteransprüchen.

Mit der erfindungsgemässen Kompakt-Fernsehkamera ist eine in der Herstellung und im Service- und/oder Montagefall preiswerte und stabile Kamera gegeben, die durch einfache Umrüstung mit Steckergehäuse und Objektivtubus zu einer handlichen, wetterfesten Fernsehkamera wird. Selbst bei Verwendung schwerer Objektive entsteht kein Verwinden des Gehäuseaufbaus.

Als weitere Vorteile der erfindungsgemässen Kompakt-Fernsehkamera erwiesen sich ferner die einfache und günstige Befestigungsart (keine Wärmeprobleme, etc.) für stehende oder hängende Montage sowie eine günstige Anordnung, insbesondere der wärmeempfindlichen Bauelemente. Auch ist eine einfache Tubusmontage möglich, wobei bei Abnahme des Tubus' von der Kamera die Frontscheibenheizung automatisch unterbrochen und beim Aufstecken automatisch wiederhergestellt wird.

Die Erfindung wird im folgenden unter Bezugnahme auf die Zeichnungsfiguren beispielsweise näher erläutert. Es zeigen:

Fig. 1 eine Explosionsdarstellung der erfindungsgemässen Kompakt-Fernsehkamera,

Fig. 2 eine Seitenansicht eines erfindungsgemässen Objektivtubus', wie er in der Kompakt-Fernsehkamera gemäss Fig. 1 in wetterfester Ausführung verwendet wird,

Fig. 3 eine Direktansicht des erfindungsgemässen Objektivtubus' gemäss Fig. 2, vom Kamerainneren aus gesehen,

Fig. 4 Detailansichten des erfindungsgemässen Objektivtubus' gemäss Fig. 2,

Fig. 5 einen Querschnitt einer erfindungsgemässen Frontscheibenheizung, wie sie in der erfindungsgemässen Kompakt-Fernsehkamera verwendet wird und

Fig. 6 eine Direktansicht der erfindungsgemässen Frontscheibenheizung nach Fig. 5 mit Blickrichtung aus dem Kamerainneren.

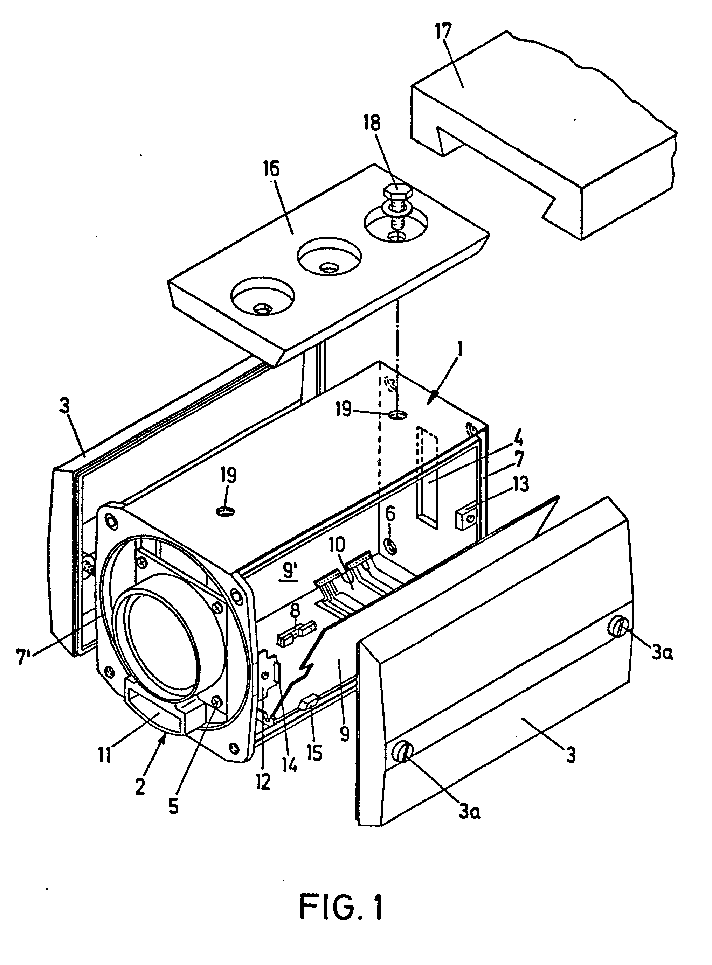

In Fig. 1, die das Kompakt-Fernsehkameragehäuse in Explosionsdarstellung zeigt, bildet ein stabiler Bügel aus Al-Druckguss als tragendes Teil einen geschlossenen Gehäuserahmen 1, der selbst beim Anbringen schwerer Objektive kein Verwinden des Aufbaus zulässt. Eine Baueinheit 2 zur Bildaufnahmeröhrenbefestigung und -einstellung, Objektivhalterung und Befestigung des Vorverstärkers, wie sie beispielsweise in der DE-A-3 143 058 (veröffentlicht am 3.2.1983) der Anmelderin näher beschrieben ist und die sich aus einer Bildaufnahmeröhre und einer zugehörigen Ablenkeinheit sowie einer zugehörigen Zentriereinheit, einer Jochaufnahme, einem Montageflansch mit Exzenterverstellung, einem Vorverstärker und einer Objektivaufnahmeplatte zusammensetzt, wird, fertig zusammenmontiert, mit vier Schrauben 5 am Gehäuserahmen 1 elektrisch isoliert an dessen Frontseite befestigt. An den beiden Längsseiten des Gehäuserahmens 1 werden je ein Gehäusedeckel 3, vorzugsweise mit je zwei unverlierbaren Schrauben, angeschraubt.

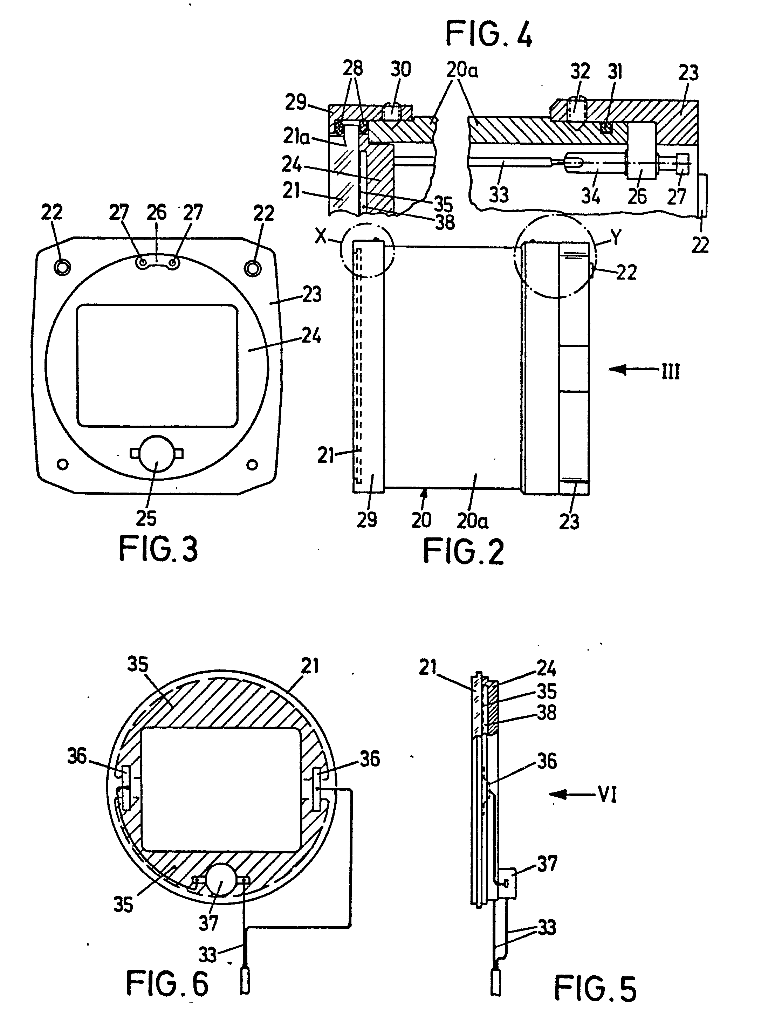

Für austauschbare Zusatzgeräte sind an der Gehäuserückseite eine Steckerleiste für ein Steckergehäuse (Rahmenausschnitt 4) und ein Stromversorgungsteil (an den vier Befestigungsgewinden 6) montierbar, die für eine wetterfeste Ausführung bzw. eine Innenraumausführung vorgesehen werden können. Die Schutzart IP 66 nach DIN 40 050 einer wetterfesten Ausführung der Kompakt-Fernsehkamera wird mittels O-Ringdichtungen 7 bei den Gehäusedeckeln 3, dem (nicht dargestellten) Steckergehäuse und dem in Verbindung mit den Fig. 2 bis 4 näher beschriebenen Objektivtubus gewährleistet.

Die Betriebssicherheit der Kompakt-Fernsehkamera bei hohen Temperaturen (+ 55°C Umgebungstemperatur) wird durch die günstige Anordnung der wärmeempfindlichen Bauelemente am Gehäuserahmen 1 erhalten. So ist beispielsweise am Gehäuseboden ein Ansatz 8 zur Befestigung von zu kühlenden Leistungstransistoren vorgesehen.

An beiden Längsseiten des Gehäuserahmens 1 ist je eine Leiterplatte schwenkbar und somit servicegerecht angeordnet. Diese beiden, beispielsweise als Verstärkerplatte 9 und als Impulsteilplatte 9' vorgesehenen Leiterplatten sind mittels einer flexiblen Leiterplatte 10 verbunden. Die (nicht dargestellte) Vorverstärkerplatte, die abgeschirmt in einer Ausnehmung 11 des Montageflansches der Baueinheit 2 angeordnet ist, ist steckbar mit der Verstärkerplatte 9 über ein Verbindungskabel, o.ä. verbunden. An Ansätzen 12 und 13 für die Verschraubung der Gehäusedeckel 3 sind Schnapphaken 14 zur Halterung der längsseitigen Leiterplatten 9 und 9' angeordnet, die durch leichten Druck gegen den Leiterplattenhalter 14 (Schnapphaken) ausgeschwenkt werden können. Ein Anschlag 15 auf den Leiterplatten für den Schwenkbereich gibt den Innenaufbau der Kompakt-Fernsehkamera völlig frei, schützt aber die Bauteile vor einem Kontakt mit einer Bodenfläche. Nach dem Trennen der Steckverbindungen zwischen der flexiblen Leiterplatte 10 und den beiden «grossen» Leiterplatten, die im übrigen Steckverbindungen für nachrüstbare Module aufweisen können, ist ein sofortiger eventueller Leiterplattenaustausch möglich.

Ohne die auf einer Halterung fest montierte Kompakt-Fernsehkamera abzunehmen, ist nach dem Lösen der beiden unverlierbaren Schrauben 3a je Gehäusedeckel 3, das Kameragehäuse offen. Die elektrischen und elektronischen Bauteile und alle Regler sind ungehindert zugänglich. Somit können dank des Gehäuseaufbaus, der Verschaltung und Anordnung der elektrischen Bauteile selbst vor Ort Einstell- und Service-Arbeiten einfach durchgeführt werden.

Für eine stehende oder hängende Montage der Kompakt-Fernsehkamera ist ein schwalbenschwanzförmiger Sockel 16 mit zugeordneter Führungsplatte 17 vorgesehen. Der Sockel 16 wird mit einer Schraube 18 durch entsprechende und geeignet angeordnete Bohrungen im Sockel 16 hindurch in entsprechenden Bohrungen 19 an der Gehäuseunterseite oder Gehäuseoberseite verdrehungssicher und der Schwerpunktlage der Kamera angepasst, befestigt. Die aus dem Sockel 16 und der Führungsplatte 17 bestehende Schwalbenschwanzführung dient zum schnellen Kameraaustausch mit gleichbleibender Arretierung. Dadurch, dass bei der Befestigung der Führungsplatte 17 beispielsweise an einer Zimmerdecke, nach dem Anbringen des Sockels 16 an der Kameraoberseite die Normallage der Kompakt-Fernsehkamera erhalten bleibt, entfällt eine elektrische Umstellung der Ablenkung. Ferner entstehen durch diese Anbringungsart keine zusätzlichen Wärmeprobleme, die durch die vertikale Verdrehung der Kamera um 180° auftreten können.

Wird die Kompakt-Fernsehkamera als wetterfeste Ausführung vorgesehen, so wird ein Objektivtubus mit einer Frontscheibe und einer Frontscheibenbeheizung auf das Kameragehäuse gesteckt.

Fig. 2 zeigt eine Seitenansicht eines Objektivtubus', wie er für eine wetterfeste Ausführung der Kompakt-Fernsehkamera vorgesehen werden kann. Ein Pfeil III in Fi.g 2 kennzeichnet die Blickrichtung auf den Objektivtubus 20 vom Kamerainneren zur Frontscheibe 21. Augen 22 am Flansch 23 am einen Ende des Objektivtubus' 20 bestimmen die Anbaulage. Das andere Ende des Objektivtubus' 20 bzw. dessen Tubusrohres 20a wird von einem Überwurfring 29 gefasst.

Fig. 3 zeigt die Ansicht des Objektivtubus' 20 in Blickrichtung des Pfeils III in Fig. 2. In Fig. 3 sind zusätzlich zu Flansch 23 und den Augen 22 eine kreisrunde Fläche mit rechteckigem Ausschnitt in der Mitte dasgestellt. Diese Fläche stellt einen Kontaktträger 24 als Teil der in Verbindung mit den Fig. 4 bis 6 näher beschriebenen Frontscheibenheizung dar. Der rechteckige Ausschnitt im Kontaktträger 24 entspricht der Objektabbildung im Seitenverhältnis 3 : 4. Im Kontaktträger 24 ist ferner eine Ausnehmung 25 für einen Thermostaten vorgesehen. Zwischen Flansch 23 und Tubusrohr 20a ist ein in Verbindung mit Fig. 4 näher erläuterter Kontaktstifteeinsatz 26 mit federnden Kontakten 27 eingeklemmt, der in einer Aussparung im Flansch 23 aus Al-Druckguss sitzt.

Die Augen 22 am Flansch 23 bestimmen die Anbaulage, so dass – wie später noch deutlicher zu erkennen sein wird – die Bildformatbegrenzung auf der Frontscheibe 21 und die Verbindung zu den Federkontakten 27 für die Stromzuführung zur Frontscheibenbeheizung immer stimmen.

In Fig. 4, die Detailansichten der mit X und Y gekennzeichneten Stellen im Objektivtubus gemäss Fig. 2 in vergrösserter Darstellung zeigt, ist gemäss der Detailansicht X die Frontscheibe 21 zwischen zwei O-Ringdichtungen 28 gelagert. Die Frontscheibe 21 und der Kontaktträger 24 werden vom aufgedrückten Überwurfring 29 mit zugehörigen Schrauben 30 zur Fixierung am Tubusrohr 20a gehalten. Die O-Ringdichtungen 28 dienen zur Abdichtung und Isolierung von wärmeleitenden Metallteilen, damit der Frontscheibe 21 möglichst wenig Heizwärme entzogen wird. Die Abstufung 21a an der Frontscheibe 21 ist erforderlich, damit der Rand des Überwurfringes 29 mit der Frontscheibe 21 eine ebene Fläche bei Verwendung eines Scheibenwischers bildet.

Gemäss der Detailansicht X in Fig. 4 ist der Kontaktstifteeinsatz 26 mit dem (den) Federkontakt(en) 27 in eine Aussparung im Flansch 23 gesteckt eingezeichnet. Nach dem Einschieben des mit einer O-Ringdichtung 31 versehenen flanschseitigen Endes des Tubusrohres 20a und dem Festziehen von (zwei) Schrauben 32 im Flansch 23, ist der Kontaktstifteeinsatz 26 gehalten.

Insbesondere durch das einfache Einstecken und Fixieren des Kontaktstifteeinsatzes 26 sowie die genaue Anbaulagebestimmung mittels der Augen 22, ist eine äusserst einfache Tubusmontage gegeben. Der Objektivtubus 20, beispielsweise Schutzart IP 66 nach DIN 40 050, wird auf die Kompakt-Fernsehkamera gesteckt und mit (vier) unverlierbaren Schrauben (nicht dargestellt) befestigt. Die O-Ringdichtung 7' am Gehäuserahmen 1 dichtet die Verbindungsstelle nach IP 66 ab. Die Tubuslänge kann den Objektiven angepasst werden, wobei lediglich das Auswechseln des Tubusrohres 20a dementsprechend erforderlich ist. Bei der Abnahme des Objektivtubus' 20 von der Kompakt-Fernsehkamera wird die Frontscheibenheizung durch das Trennen der Kontaktstelle (Federkontakte 27) unterbrochen; beim Aufstecken ist die Kontaktgabe wiederhergestellt.

Das Anschlusskabel 33 der Frontscheibenheizung ist mit Steckhülsen 34 über die Anschlussstifte der Federkontakte 27 im Kontaktstifteeinsatz 26 geschoben und ist somit ebenfalls einer einfachen Montage und Wartung dienlich.

Gemäss Fig. 5 die einen Querschnitt einer in der erfindungsgemässen Kompakt-Fernsehkamera zu verwendenden Frontscheibenheizung zeigt und gemäss Fig. 6, die eine Direktansicht dieser Frontscheibenheizung in Blickrichtung des Pfeiles VI in Fig. 5 bei weggelassenem Kontaktträger 24 zeigt, sind auf der Innenseite der Frontscheibe 21 im äusseren Scheibenbereich zwei gegenüberliegende, segmentartige Heizbeläge 35 aufgedampft, die der Objektivabbildung im Seitenverhältnis 3 : 4 angepasst sind. Mit Kontaktfedern 36 am/im Kontaktträger 24 wird die Stromzuführung vom Anschlusskabel 33 zur Heizschicht hergestellt. Ein Thermostat 37 (eingebettet in die Ausnehmung 25 des Kontaktträgers 24) regelt die Heizperiode. Diese Thermostatregelung für die Frontscheibe 21 schaltet bereits bei + 24°C ein, so dass keine Gefahr besteht, dass bei einer Montage bei Normalklima (+ 23°C, rel. Feuchte 50%) eine Betauung an der Frontscheibe 21 auftritt. Es entfällt somit die Forderung, dass die Frontscheibe 21 einer wetterfesten Kompakt-Fernsehkamera ohne eingeschaltete Frontscheibenheizung mittels Doppelglasscheibe und Trockenmittel betauungsfrei sein muss; diese Massnahmen sind bei der Einrichtung zur Frontscheibenbeheizung ähnlichen Aufbaus gemäss DE-PS 2 921 927 der Anmelderin erforderlich.

Die Heizbeläge 35 der erfindungsgemässen Kompakt-Fernsehkamera sind parallel geschaltet, weil dadurch der erforderliche Widerstand zur gegebenen Spannung und der gewünschten Leistung verdoppelt werden konnte. Bedingt durch die Bedampfungstechnologie, leidet die Haltbarkeit der im μ-Bereich liegenden Bedampfungsschicht, wenn die Schichtstärke zur Verringerung des Widerstandes dicker gemacht wird.

Die Stromversorgung der Kompakt-Fernsehkamera ist so ausgelegt, dass bei allen wetterfesten Ausführungen, die Scheibenbeheizung ohne extra Netzteil betriebsbereit ist.

Der Kontaktträger 24, vorzugsweise aus Kunststoff, ist so ausgebildet, dass die abgestrahlte Wärme vom Heizbelag 35 nicht direkt in den Objektivtubus 20 gelangt. Ebenso wird durch ein Luftpolster 38 zwischen Heizbelag 35 und Kontaktträger 24 die Wärmeübertragung durch einen direkten Kontakt verhindert. Es ist also sichergestellt, dass der grösste Teil der erzeugten Wärme nutzbringend an der Frontscheibe bleibt.

Wie ohne weiteres ersichtlich, kann diese einfache Auslegung und Einrichtung einer Frontscheibenbeheizung in Objektivtuben für Kompakt-Fernsehkameras ohne technischen Aufwand montiert werden.

Die Schutzart IP 66 nach DIN 40 500 einer wetterfesten Ausführung der Kompakt-Fernsehkamera wird mittels der O-Ringdichtungen 7 bei den Gehäusedeckeln 3, einem Steckergehäuse und dem Objektivtubus 20 gewährleistet. Für den vollen Einsatz der Kompakt-Fernsehkamera bei − 35°C Umgebungstemperatur sorgt die eben beschriebene, direkte Frontscheibenheizung, die eine Eisbildung an der Frontscheibe 21 verhindert. Entsprechend wird die Betriebssicherheit bei + 55°C Umgebungstemperatur durch die günstige Anordnung der wärmeempfindlichen Bauelemente am Gehäuserahmen 1 erzielt (vgl. Beschreibung zur Fig. 1).

Der solide Aufbau der Kompakt-Fernsehkamera aus Al-Druckgussteilen in Verbindung mit den Abmassen einer Innenraumkamera, ergibt durch Umrüstung mit Steckergehäuse und schraublosem Objektivtubus eine handliche, wetterfeste Kompakt-Fernsehkamera.

**Patentansprüche**

1. Kompakt-Fernsehkamera für Innenraum- oder Aussenverwendung mittels einfacher Umrüstung mit Steckergehäuse, Objektivtubus und Frontscheibenheizung, mit einem Gehäuse (1), einer Objektivaufnahme, einer Befestigungsvorrichtung und Leiterplatten (9, 9') im Gehäuseinneren, gekennzeichnet durch die Kombination der folgenden Merkmale:

a) einen stabilen geschlossenen Gehäuserahmen (1) und zwei seitlich dazu angeordneten Gehäusedeckeln (3), die zusammen mit dem Gehäuserahmen (1) das Kameragehäuse bilden,

b) eine frontseitig elektrisch isoliert montierte Baueinheit (2) zur Aufnahmeröhrenbefestigung, Objektivhalterung und Befestigung des Vorverstärkers der Fernsehkamera,

c) einer an der Kamera-Unterseite oder Kamera-Oberseite an dortigen entsprechenden Bohrungen (19) befestigbaren Schwalbenschwanzführung (16, 17) zur Befestigung der Fernsehkamera, bestehend aus einem Sockel (16) und einer Führungsplatte (17),

d) eine flexible Leiterplatte (10), die schwenkbare, an der Gehäusedeckel- bzw. Kamera-Längsseite angeordnete Leiterplatten (9, 9') verbindet, die ihrerseits durch jeweils einen Leiterplattenhalter (14) gehalten sind und durch einen Anschlag (15) in ihrem Schwenkbereich begrenzt werden.

2. Kompakt-Fernsehkamera nach Anspruch 1 in wetterfester Ausführung mit Objektivtubus (20) und direkter Frontscheibenheizung, gekennzeichnet durch

e) einen Anbauflansch (23) mit einer Aussparung für einen Kontaktstifteeinsatz (26) mit federnden Kontaktstiften (27),

f) eine zwischen zwei Dichtungsringen (28) gelagerte Frontscheibe (21) mit an deren Innenseite gegenüberliegenden, segmentartig aufgedampften Heizbelägen (35) und einer Abstufung (21a) im äusseren Scheibenbereich,

g) einen Überwurfring (29), der die Frontscheibe (21) und einen Kontaktträger (24) hält,

h) einen luftgefüllten Hohlraum (38) zwischen Heizbelag (35) und Kontaktträger (24).

3. Kompakt-Fernsehkamera nach Anspruch 2, dadurch gekennzeichnet,

i) dass der Kontaktstifteeinsatz (26) in einer Aussparung des Flansches (23) und

j) durch das eingeschobene und mit einer Ringdichtung (31) versehene Tubusrohr (20a) des Objektivtubus (20) sowie Schrauben (32) im Flansch (23) in der Aussparung gehalten ist.

4. Kompakt-Fernsehkamera nach Anspruch 2 oder 3, dadurch gekennzeichnet, dass der Flansch (23) zwei Augen (22) aufweist.

5. Kompakt-Fernsehkamera nach einem der Ansprüche 1 bis 4, dadurch gekennzeichnet, dass an der Gehäuserückseite ein Rahmenausschnitt (4) und/oder Befestigungsgewinde (6) für Zusatzbauteile angeordnet sind.

6. Kompakt-Fernsehkamera nach Anspruch 1 oder 2, dadurch gekennzeichnet, dass zwischen die Längsseiten des Gehäuserahmens (1) und die Gehäusedeckel (3) Ringdichtungen (7) eingesetzt sind.

7. Kompakt-Fernsehkamera nach einem der Ansprüche 1 bis 6, dadurch gekennzeichnet, dass am Gehäuseboden ein Ansatz (8) zur wärmeableitenden Befestigung von elektrischen Bauteilen vorgesehen ist.

8. Kompakt-Fernsehkamera nach Anspruch 1, dadurch gekennzeichnet, dass die Gehäusedeckel (3) mittels unverlierbarer Schrauben (3a) an zugeordneten Ansätzen (12, 13) des Gehäuserahmens (1) befestigt sind.

9. Kompakt-Fernsehkamera nach Anspruch 2, dadurch gekennzeichnet, dass der Kontaktträger (24) eine Ausnehmung (25) für einen Thermostaten (37) für die Heizungsregelung aufweist.

10. Kompakt-Fernsehkamera nach Anspruch 2, Markmal g, dadurch gekennzeichnet, dass der Überwurfring (29) zur Fixierung am Tubusrohr (20a) aufgedrückt und mit Schrauben (30) gehalten ist.

11. Kompakt-Fernsehkamera nach einem der vorhergehenden Ansprüche 2 bis 10, dadurch gekennzeichnet, dass das Anschlusskabel (33) der Frontscheibenheizung mittels Steckhülsen (34) mit dem Kontaktstifteeinsatz (26) bzw. den Federkontakten (27) verbunden ist.

12. Kompakt-Fernsehkamera nach einem der vorhergehenden Ansprüche 2 bis 11, dadurch gekennzeichnet, dass das Anschlusskabel (33) mittels Kontaktfedern (36) am Kontaktträger (24) mit dem Heizbelag (35) elektrisch verbunden ist.

## Claims

1. A compact television camera for interior or exterior use by means of simple conversion with a connector housing, a lens tube and front panel heating, having a housing (1), a lens mount, a securing device and printed circuit boards (9, 9') in the interior of the housing, characterized by the combination of the following features:

a) a stable, closed housing frame (1) and two housing covers (3), which are disposed laterally in relation thereto and which together with the housing frame (1) form the camera housing,

b) a module (2), mounted so as to be electrically insulated at the front side, to secure the camera tube, to mount the lens and to secure the preamplifier of the television camera,

c) a dovetail guide (16, 17), securable at the camera bottom or camera top at corresponding bores (19) located thereat, for securing the television camera, consisting of a base (16) and a guide plate (17),

d) a flexible printed circuit board (10), which connects pivotable printed circuit boards (9, 9'), which are disposed at the longitudinal side of the housing covers or of the camera and which for their part are held by respective printed circuit board holders (14) and are limited in their pivotable range by an end stop (15).

2. Compact television camera according to claim 1, of weather-proof construction, having a lens tube (20) and direct front panel heating, characterized by

e) a mounting flange (23) with a recess for a contact pin insert (26) with resilient contact pins (27),

f) a front panel (21), mounted between two sealing rings (28), with heating coatings (35), which are disposed opposite one another at the internal surface thereof and which are vapour-deposited in the manner of segments, and a stepped portion (21a) in the outer region of the panel,

g) a collar (29), which holds the front panel (21) and a contact carrier (24),

h) an air-filled cavity (38) between the heating coating (35) and the contact carrier (24).

3. Compact television camera according to claim 2, characterized in that

i) the contact pin insert (26) is located in a recess of the flange (23) and

j) is held in the recess by the tube section (20a) – inserted and provided with an annular seal (31) – of the lens tube (20) as well as screws (32) in the flange (23).

4. Compact television camera according to claim 2 or 3, characterized in that the flange (23) has two eyes (22).

5. Compact television camera according to one of claims 1 to 4, characterized in that a frame aperture (4) and/or securing thread (6) for accessory components are disposed at the rear of the housing.

6. Compact television camera according to claim 1 or 2, characterized in that annular seals (7) are inserted between the longitudinal sides of the housing frame (1) and the housing covers (3).

7. Compact television camera according to one of claims 1 to 6, characterized in that a connection (8) for the heat-dissipating securing of electrical components is provided at the base of the housing.

8. Compact television camera according to claim 1, characterized in that the housing covers (3) are secured by means of captive screws (3a) at associated connections (12, 13) of the housing frame (1).

9. Compact television camera according to claim 2, characterized in that the contact carrier (24) exhibits a recess (25) for a thermostat (37) for regulating the heating.

10. Compact television camera according to claim 2, feature g, characterized in that the collar (29) for fixing at the tube section (20a) is pressed on and held by screws (30).

11. Compact television camera according to one of the preceding claims 2 to 10, characterized in that the connecting cable (33) of the front panel heating is connected by means of adaptor sockets (34) to the contact pin insert (26) or the spring contacts (27).

12. Compact television camera according to one of the preceding claims 2 to 11, characterized in that the connecting cable (33) is electrically connected by means of contact springs (36) at the contact carrier (24) to the heating coating (35).

**Revendications**

1. Caméra de télévision compacte destinée à être utilisée en intérieur ou en extérieur moyennant une modification simple d'équipements mettant en œuvre un boîtier à connecteur, un barillet d'objectif et un dispositif de chauffage de la plaque avant, et comportant un boîtier (1) et un logement pour l'objectif, un dispositif de fixation et des plaquettes à circuits imprimés (9, 9') à l'intérieur du boîtier, remarquable par la combinaison des caractéristiques suivantes:

a) un cadre de boîtier fermé, stable (1) et deux couvercles (3) de boîtier, qui sont disposés latéralement par rapport à ce cadre et qui forment, en association avec ce cadre (1) du boîtier, le logement de la caméra,

b) un module (2) monté en étant électriquement isolé sur la face avant et utilisé pour la fixation du barillet de prise de vues, le soutien de l'objectif et la fixation du préamplificateur de la caméra de télévision,

c) un guide en queue d'aronde (16, 17) pouvant être fixé sur la face inférieure ou sur la face supérieure de la caméra à l'aplomb de perçages correspondants (19) qui y sont situés, pour la mise en place de la caméra de télévision, et constitué par un socle (16) et une plaque de guidage (17),

d) une plaquette à circuits imprimés (10), souple, qui relie des plaquettes à circuits imprimés (9, 9') basculables, disposées sur le côté du couvercle du boîtier ou sur le côté longitudinal de la caméra et qui, pour leur part, sont maintenues respectivement par un support (14) de plaques à circuits imprimés et dont l'amplitude du déplacement est limité par une butée (15).

2. Caméra de télévision compacte selon la revendication 1, dans une forme de réalisation résistant aux intempéries et comportant un barillet d'objectif (20) et un dispositif de chauffage direct de la plaque avant, caractérisé par:

e) une bride de montage (23) comportant un évidement pour un «insert» (26) comportant des broches de contact élastiques (27),

f) une plaque avant (21) montée entre deux plaques d'étanchéité (28) et comportant des revêtements chauffants (35) déposés par évaporation en forme de segments et situés en vis-à-vis de la face intérieure de la plaque, et un étagement (21a) ménagé dans la zone extérieure de la plaque,

g) une bague de fixation (29), qui maintient la plaque avant (21) et un porte-contacts (24),

h) une cavité (38) emplie d'air entre le revêtement chauffant (35) et le porte-contacts (24).

3. Caméra de télévision compacte selon la revendication 2, caractérisée en ce que:

i) l'«insert» (26) à broches de contract est en appui dans un évidement de la bride (23), et

j) est maintenu dans la bride (23), dans l'évidement, par un tube (20a), inséré et muni d'une bague d'étanchéité (31), du barillet d'objectif (20) ainsi que par des vis (32).

4. Caméra de télévision compacte selon la revendication 2 ou 3, caractérisée en ce que la bride (23) comporte deux œillets (22).

5. Caméra de télévision compacte selon l'une des revendications 1 à 4, caractérisée en ce qu'une découpe (4) du cadre et/ou un taraudage de fixation (6) pour des composants supplémentaires est ménagé(e) dans la face arrière du boîtier.

6. Caméra de télévision compacte selon la revendication 1 ou 2, caractérisée en ce que des bagues d'étanchéité (7) sont insérées entre les côtés longitudinaux du cadre (1) du boîtier et les couvercles (3) du boîtier.

7. Caméra de télévision compacte selon l'une des revendications 1 à 6, caractérisée en ce qu'il est prévu, dans le fond du boîtier, un appendice saillant (8) permettant de fixer, d'une manière évacuant la chaleur, des composants électriques.

8. Caméra de télévision compacte selon la revendication 1, caractérisée en ce que les couvercles (3) du boîtier sont fixés à l'aide de vis imperdables (3) à des appendices saillants associés (12, 13) du cadre (1) du boîtier.

9. Caméra de télévision compacte selon la revendication 2, caractérisée en ce que le porte-contacts (24) comprend un évidement (25) pour un thermostat (37) pour la régulation du chauffage.

10. Caméra de télévision compacte selon la revendication 2, caractéristique g, caractérisée en ce que la bague de fixation (29) est enfoncée pour la fixation sur le tube (20a) du barillet et est maintenue par des vis (30).

11. Caméra de télévision compacte selon l'une des revendications précédentes 2 à 10, caractérisée en ce que le câble de raccordement (33) du dispositif de chauffage de la plaque avant est relié à l'aide de douilles d'enfichage (34) à l'«insert» à broches de contact (26) ou aux contacts élastiques (27).

12. Caméra de télévision compacte selon l'une des revendications précédentes 2 à 11, caractérisée en ce que le câble de raccordement (33) est relié électriquement à l'aide de ressorts de contact (36) sur le porte-contacts (24), au revêtement chauffant (35).

FIG. 1

# FIG. 4

# FIG.3

# FIG.2

# FIG.6

# FIG.5